# EUROPÄISCHE PATENTSCHRIFT

(11) **EP 2 215 354 B1**
(45) Veröffentlichungstag und Bekanntmachung des Hinweises auf die Patenterteilung: **23.08.2017**
(21) Anmeldenummer: 08853819.4
(22) Anmeldetag: 12.11.2008
(51) Int. Cl.: G01B 11/16, F03D 17/00, G01M 5/00, G01S 17/08

(54) **VERFAHREN UND SYSTEM ZUR MESSUNG EINER AUSLENKUNG EINES HOHLBAUTEILS EINER WINDENERGIEANLAGE AUS EINER NORMALPOSITION**
METHOD AND SYSTEM FOR MEASURING DEFLECTION OF A HOLLOW COMPONENT OF A WIND ENERGY SYSTEM FROM A NORMAL POSITION
PROCÉDÉ ET SYSTÈME DE MESURE DE LA DÉVIATION D'UN ÉLÉMENT CREUX D'UNE ÉOLIENNE PAR RAPPORT À UNE POSITION NORMALE

(30) Priorität: 26.11.2007 DE 102007057178; 06.12.2007 DE 102007059165
(43) Veröffentlichungstag der Anmeldung: 11.08.2010
(73) Patentinhaber: Windcomp GmbH, 20146 Hamburg (DE)
(72) Erfinder: LUCKS, Christoph, 20146 Hamburg (DE)
(74) Vertreter: Raffay & Fleck
(86) Internationale Anmeldenummer: PCT/EP2008/065339
(87) Internationale Veröffentlichungsnummer: WO 2009/068437

(56) Entgegenhaltungen:
- EP-A- 0 146 829
- WO-A-2006/024146
- WO-A-2008/123510
- WO-A1-2006/011386
- DE-A1-102006 002 708
- DE-C2- 19 520 305
- JP-A- 8 327 400
- JP-A- 2002 131 018
- US-A- 5 383 368
- US-A1- 2004 174 542

## Beschreibung

### Technisches Gebiet

Die Erfindung betrifft ein Verfahren sowie ein System zur Messung einer Auslenkung eines im Wesentlichen langgestreckten Hohlbauteils einer Windenergieanlage aus einer Normalposition.

Hohlbauteile im Sinne dieser Erfindung sind solche Bauteile der Windenergieanlage, die im Innern hohl und zugleich im Wesentlichen langgestreckt verlaufend sind. Insbesondere sind die Rotorblätter und der Turm bzw. Turmabschnitte solche Hohlbauteile, sofern letztere, wie heute üblich hohl gestaltet sind. Aber auch das Maschinenhaus (die Gondel) sowie in der Gondel angeordnete Trägerteile können Hohlbauteile im Sinne dieser Erfindung sein. Auch sie können mit dem erfindungsgemäßen Verfahren hinsichtlich einer Auslenkung vermessen werden.

### Stand der Technik

Die überwiegende Zahl von Rotorblättern von Windenergieanlagen wird aus faserverstärkten Kunststoffen hergestellt. Charakteristisch für die Konstruktion von Strukturbauteilen aus faserverstärkten Kunststoffen ist die unterschiedliche Anordnung und Ausrichtung der Fasern in den einzelnen Bereichen des Blattkörpers. Auch können unterschiedliche Fasern wie Glas- und Kohlefasern miteinander kombiniert und sowohl als Massiv- und auch als Sandwich-Laminate verbaut werden. Somit weisen Rotorblätter von Windenergieanlagen eine komplexe und asymmetrische Struktur auf.

Die Aufgabe eines Rotors ist es, die kinetische Energie der bewegten Luftmasse in ein nutzbares Drehmoment umzuwandeln. Dies soll im Auslegungszeitraum der Windenergieanlage von typischerweise 20 Jahren sicher, das heißt z.B. ohne den Turm zu berühren, geschehen.

Im Betrieb wird die Blattstruktur sowohl durch das Eigengewicht als auch durch den Wind dynamisch belastet, die Außenhaut ist dem Wetter ausgesetzt und die Laminate können Feuchtigkeit aufnehmen.

Rotorblätter werden üblicherweise so ausgelegt, dass alle Betriebslasten und auch die Maximallasten einer starken Windböe in einem Auslegungszeitraum von 20 Jahren sicher aufgenommen werden können. Dem Umstand, dass Laminat durch ständige Belastungen altert und demnach alle Materialeigenschaften zeitabhängig sind, wird in der Auslegung der Blätter durch Sicherheitsfaktoren begegnet. Das heißt, die Rotorblätter sind üblicherweise so dimensioniert, dass sie auch nach 20 Jahren noch alle Lasten aufnehmen können sollen.

Einfluss auf die Dauerfestigkeit der Rotorblätter und deren Festigkeit bei Maximallasten haben zum einen die tatsächlichen Betriebslasten (Schräganströmung, Edgewise Vibrations, Stalleffekte und dergleichen) zum anderen aber auch Randbedingungen bei der Fertigung sowie Schäden durch äußere Einwirkungen wie zum Beispiel bei einem Blitzschlag.

Der allmähliche Abbau der Materialeigenschaften durch den Betrieb ist die eigentliche Abnutzung des Rotorblattes. Es ist bekannt, dass der Abbau der Materialeigenschaften bei faserverstärkten Kunststoffen durch einen Steifigkeits- und einen Festigkeitsverlust erkennbar ist. Diese negativen Änderungen der Materialeigenschaften wurden in Laborversuchen an Prüfkörpern nachgewiesen. Es ist ebenso bekannt, dass eine Änderung der Steifigkeit mit einer Änderung der Eigenfrequenz und einer Änderung des Biegeverhaltens einhergeht. Inwieweit jedoch die ermittelten Erkenntnisse aus Laborversuchen mit einfachen Testkörpern - unidirektionale Faserausrichtung bei gleichmäßigem Faseraufbau - auf komplexe Strukturen wie Rotorblätter von Windenergieanlagen übertragbar sind, ist mit derzeitigen Wissensstand nicht eindeutig erfassbar.

In der bisherigen Erfahrung mit dem Betrieb von Windenergieanlagen, bei der es z.B. auch unerwartet zu Kollisionen zwischen Blatt und Turm gekommen ist, zeigte sich dass mit einem kontrollierten Betrieb des Rotors die Standsicherheit wesentlich erhöht und Fehler frühzeitig entdeckt werden können. Eine Kollision des Rotors mit dem Turm im Betrieb führt zu erheblichen Schäden bis hin zum Totalverlust der gesamten Anlage.

Dem Problem der messtechnischen Überwachung der Durchbiegung eines Rotorblattes aufgrund des Winddruckes (Auslenkung in einer Richtung im Wesentlichen senkrecht zur Rotorebene) widmet sich die DE 10 2006 002 709. Hier werden in dem Rotorblatt einerseits nabennah, andererseits in Richtung der Blattspitze Bezugspunkte geschaffen, die über ein mechanisches Seilsystem miteinander verbunden werden. Bei einer Auslenkung des Rotorblattes aufgrund des Winddruckes ergibt sich eine Längenveränderung der Seile, die von einer Auswerteeinheit zu einer tatsächlichen Auslenkung berechnet werden. So soll z.B. bei Starkwind oder aber bei Materialermüdung durch Alterung einer zu weitgehenden Auslenkung des Rotorblattes, schlimmstenfalls einer Kollision desselben mit dem Turm, vorgebeugt werden.

Das in dieser Druckschrift beschriebene System ist zum einen aufwendig in ein Rotorblatt einzurüsten, insbesondere nur schwer nachrüstbar. Zum anderen ist es in einer Überwachung der Auslenkung des Rotorblattes stets auf die Richtung im Wesentlichen senkrecht zur Rotorblattebene beschränkt. Die weitere Auslenkung des Rotorblattes innerhalb der Rotorebene, die das Rotorblatt aufgrund seines Eigengewichtes in den von der vertikalen abweichenden Stellungen erfährt, kann mit diesem System nicht nachgehalten werden. Auch solche Auslenkungen geben jedoch einen wertvollen Aufschluss über Alterungseffekte und eventuelle Materialermüdungen. Schließlich ist das in dieser Druckschrift offenbarte mechanische System aufgrund der Trägheit der Mechanik selbst in der Messung träge, so dass z.B. Vibrationseffekte und dgl. in der Regel nicht mit einer ausreichenden Genauigkeit festgestellt und vermessen werden können.

Ein weiteres Verfahren zur Feststellung der Auslenkung eines Rotorblattes einer Windenergieanlage ist in der DE 10 2006 002 708 A1 offenbart. Dort wird der Lichtstrahl eines Lasers auf ein Reflektionsprisma gleitet. Der von dem Prisma zurückgeworfene Lichtstrahl von einem Detektor, der die Auftreffposition des Rückstrahls analysiert. Eine Auslenkung des Rotorblattes führt zu einer Verschiebung der Position des Prismas. Dies wiederum führt zu einem Wandern des Auftreffpunktes des reflektierten Lichtstrahls auf dem Detektor, der diese Positionsveränderung misst und einer Auswerteeinheit zur Verfügung stellt. Zwar ist diese Einrichtung einfacher nachzurüsten als die in der DE 10 2006 002 709 A1 beschriebene, jedoch werden hierfür kostspielige und empfindliche Komponenten benötigt. Neben einem in optischer Qualität hergestellten Prisma als Reflektionskörper ist zusätzlich zu einem Laseremitter ein Detektor vorzusehen, der nach Art einer Zeilenkamera oder dergleichen die Messposition eines Lichtstrahls erfasst. Ein solcher Detektor ist kostspielig in der Anschaffung. Zudem muss er mit Energieversorgung und Datenleitungen versehen werden. Auch ist er vergleichsweise störungsanfällig und stellt so eine mögliche Fehlerquelle dar.

Aus der EP-A-0 146 829 ist ein Verfahren und ein System bekannt, um die laterale Verschiebung eines Bauteils, zum Beispiel eines Roboterarms, auf dem ein Sensor fixiert ist, zu messen, wobei ein gestuftes Bauteil als Bezugssystem verwendet wird. Jedoch gibt sie keinen Hinweis, ein solches System oder Verfahren für die Vermessung eines Bauteils zu verwenden. Auch gibt sie keinen Hinweis darauf, aus der Position eine Auslenkung, wie eine Verbiegung, zu berechnen.

Die JP 08 327400 A lehrt eine Abstandsmessung mit einem gestuften Target zum Aufbau eines Rotationsencoders zu verwenden. Sie gibt jedoch keinen Hinweis auf die Verwendung einer Abstandsmessung mit gestuftem Target zur Bestimmung einer Verbiegung.

Die US-A-5 383 368 lehrt die Verwendung einer Messung der Deflektion eines Laserstrahls auf einem PSD zur Bestimmung der Verbiegung eines Roboterarms durchzuführen.

Auch der Turm einer Windkraftanlage unterliegt Kräften, die das Material, üblicherweise Stahl oder Stahlbeton, belasten. Bei den erheblichen Höhen der heutigen Windenergieanlagen von 100 m und mehr kommt es auch im Bereich der Türme zu messbaren Auslenkungen aufgrund es an der Windenergieanlage angreifenden Winddrucks. Auch hier muss also eine Materialermüdung überwacht und rechtzeitig eine Warnung ausgegeben werden. Zudem ist die Vermessung einer auftretenden Auslenkung auch für die Weiterentwicklung von Material und/oder Konstruktion dieser Bauteile von großem Wert.

### Darstellung der Erfindung

Hier greift die Erfindung ein. Insbesondere ist es Aufgabe der Erfindung, ein Verfahren sowie ein System anzugeben, bei dem die Auslenkung eines Hohlbauteils einer Windkraftanlage aus einer Normalposition auf einfachere und zuverlässige Weise überwacht werden kann, sogar für unterschiedliche Auslenkungsrichtungen.

Eine verfahrensmäßige Lösung dieser Aufgabe ist in Anspruch 1 angegeben. Weiterbildungen des Verfahrens finden sich in den abhängigen Ansprüchen 2 und 3. Ein System, welches diese Aufgabe löst, ist mit den Merkmalen des Anspruches 4 definiert. In den abhängigen Ansprüchen 5 bis 13 sind vorteilhafte Weiterbildungen des Systems angegeben.

Grundideen, auf denen die Erfindung und Ausführungen der Erfindung basieren, werden beschrieben. Innerhalb des Hohlbauteils kann wenigstens ein Paar aus berührungslosem Abstandssensor, der eine gerichtete Abstandsmessung erlaubt, und einem zugeordneten Messtarget eingebracht werden. Dabei ist der Abstandssensor in einer ersten Position angeordnet, das Messtarget befindet sich in einer zweiten Position, in der es von dem Abstandssensor abgetastet werden kann. Der wesentliche Effekt ist dabei, dass das Messtarget eine Targetoberfläche aufweist, die jedenfalls in einer Richtung gesehen quer zu einer zu der Messrichtung des Abstandssensors senkrechten Referenzebene verläuft. Bei einer Auslenkung des Hohlbauteils aus einer Normalposition mit einer Richtungskomponente in Richtung dieses quer gerichteten Verlaufs der Targetoberfläche verschiebt sich nämlich das Messtarget relativ zu dem Abstandssensor so, dass von diesem je nach Auslenkung in dieser Richtung unterschiedliche Abstände zum Messtarget bzw. zu der Targetoberfläche gemessen werden. Dabei kann aber einem gemessenen Abstand jedenfalls eine Komponente der Auslenkungen in dieser Richtung, in der die Targetoberfläche quer zu der Referenzebene verläuft eindeutig zugeordnet werden. Der Verlauf einer Oberfläche quer zu der Referenzebene schließt nicht nur einen entsprechend geneigten Verlauf ein, sondern auch einen diskontinuierlich gestuften Verlauf, auch einen solchen mit in unterschiedlichen Abständen, ansonsten jedoch parallel zu der Referenzebene liegenden Oberflächenabschnitten.

Das System ist dabei einfach und robust, es ist einfach nachzurüsten (durch Anbringen des Messtargets und Einsetzen des Sensors) und ist wartungsarm.

Der Abstandssensor ist erfindungsgemäß an eine Rechnereinheit angeschlossen, die anhand der gemessenen Abstände die Auswertung über die Auslenkung vornimmt. Wichtig hierbei ist, dass der Abstandssensor eine im Wesentlichen punktgenaue Abstandsbestimmung vornimmt, wie sie z.B. durch einen Laserabstandssensor durchgeführt werden kann (vgl. Anspruch 10). Grundsätzlich sind aber auch andere Arten von berührungslosen Abstandssensoren denkbar, solange diese eine gerichtete und im Wesentlichen punktgenaue Abstandsmessung vornehmen können. Denkbar wären hier z.B. gerichtete Ultraschallsensoren. Wird mit einem Messstrahl gemessen (Ultraschall, Radar, Laser oder dergleichen), ist es insbesondere nicht erforderlich, dass dieser vollständig reflektiert wird. Auch bei einer schräg angeordneten Auftrefffläche auf dem Messtarget wird bei nicht zu flachen Auftreffwinkeln noch ausreichend Anteil des Messstrahls zurückgestreut, der für die Abstandsbestimmung genügt.

Um auf einfache Weise eine Auslenkung des Hohlbauteils in zwei unterschiedlichen, linear unabhängigen Richtungen messen zu können, kann auf eine wie Anspruch 2 angegebene Weise bzw. mit einem System nach Anspruch 5 vorgegangen werden.

Bei einem solchen Vorgehen werden für jede der Richtungskomponenten der zu bestimmenden Auslenkung wenigstens je ein Abstandssensor und ein diesem zugeordnetes Messtarget vorgesehen, wobei die Targetoberflächen so ausgerichtete sind, dass mit einer Abstandsmessung durch den zugeordneten Abstandssensor jeweils eine der Richtungskomponenten der Auslenkung bestimmt werden können. Auf einfache Weise kann dies mit zwei Messtargets mit ebenen Oberflächen erreicht werden, die wie in Anspruch 6 angegeben gebildet und ausgerichtet sind. Insbesondere, wenn aufgrund eines vergleichsweise großen Abstandes zwischen Abstandssensor und Messtarget der Messpunkt des Abstandssensors auf dem Messtarget von nicht zu vernachlässigendem Durchmesser ist, kann mit einer solchen Anordnung eine zuverlässige Messung der Auslenkung in verschiedenen Richtungen mit hoher Genauigkeit vorgenommen werden.

Erfindungsgemäß wird bei ausreichender räumlicher Eingrenzung des Messstrahls im Zielpunkt eine Messung der Auslenkung des Hohlbauteils in zwei linear unabhängigen Richtungen mit nur einem Paar aus berührungslosem Abstandssensor und Messtarget vorgenommen. Ein hierfür mögliches Vorgehen ist in Anspruch 1 angegeben, ein entsprechendes Messsystem in Anspruch 4 genannt. Der wesentliche Effekt hier ist, dass das Messtarget eine Oberfläche aufweist, die gegenüber einer im wesentlichen zu der Messrichtung des

Abstandssensors senkrechten Referenzebene, gekrümmt bzw. geneigt verläuft und so an ihren unterschiedlichen Oberflächenpunkten unterschiedliche Abstände zum Abstandssensor aufweist. Bei einer Auslenkung des Hohlbauteils aus einer Normalposition verschiebt sich dann das Messtarget relativ zu dem Abstandssensor, so dass von diesem je nach Auslenkung unterschiedliche Abstände zum Messtarget bzw. zu der Targetoberfläche gemessen werden. Dabei können dann aber einem gemessenen Abstand sowohl Auslenkungen in einer ersten parallel zu der Referenzebene liegenden Richtung (x-Richtung) als auch in einer zweiten, hierzu senkrechten und ebenfalls parallel zu der Referenzebene liegenden Richtung (y-Richtung), insbesondere auch kombinierte Auslenkungen eindeutig zugeordnet werden.

Eine mögliche Ausgestaltung der Targetoberfläche ergibt sich bei dieser Variante, wenn diese in einer ersten quer zu der Messrichtung verlaufenden Richtung treppenartig aufgebaut ist mit benachbarten Stufen, die in ihrer quer zu der Richtung der treppenartigen Stufung und auch quer zu der Messrichtung liegenden Verlaufsrichtung gesehen an jedem Messpunkt einen zu der Referenzebene unterschiedlichen Abstand aufweisen, wobei die zwischen den Stufen größere Abstandssprünge in Richtung der Referenzebene bestehen als der Abstandssprung innerhalb der jeweiligen Stufe. Dabei können die einzelnen Stufen mit geneigten durchgehenden Flächen versehen sein oder ihrerseits wiederum gestuft verlaufen. Wichtig ist lediglich, dass zwischen dem Punkt einer ersten Stufe mit dem geringsten Abstand zur Referenzebene und dem Punkt mit dem höchsten Abstand zu der Referenzebene aus der nächsten Stufe ein Versatz besteht und umgekehrt.

Insbesondere kommt solch ein erfindungsgemäßes Verfahren bzw. System in einem Rotorblatt bzw. mehreren Rotorblättern oder in dem Turm einer Windenergieanlage zum Einsatz. Dabei ist es bei einem Einsatz in einem Rotorblatt von praktischem Vorteil, den Abstandssensor nahe der Rotorblattwurzel bzw. der Rotornabe zu platzieren und das Messtarget in Richtung der Rotorblattspitze versetzt. Natürlich kann eine Anordnung auch in umgekehrter Richtung erfolgen, allerdings hat die oben genannte Anordnung den Vorteil, dass der Abstandssensor über den Nabenbereich mit Energie versorgt werden kann und in diesem Bereich erforderlichenfalls (Wartung, Austausch) leichter zugänglich ist. Bei der Vermessung des Turms einer Windenergieanlage ist die Anordnung (Abstandssensor oben oder unten) prinzipiell egal. Auch ist der Einsatz des Verfahrens bzw. des Systems für Messungen im Bereich des Maschinenhauses (der Gondel) einer Windenergieanlage denkbar. Dort kann z.B. mit dieser Anordnung das sogenannte "Tanzen" (also Vibrationen) des Maschinenträgers erfasst werden, der im Sinne dieser Erfindung ebenfalls ein Hohlbauteil darstellt.

Das Messtarget ist für eine möglichst genaue Messung der tatsächlichen Auslenkung soweit als möglich entfernt von dem Abstandssensor angeordnet. Dabei ist allerdings darauf zu achten, dass auch bei einer maximal zu erwartenden Durchbiegung bzw. Auslenkung des Hohlbauteils der Messstrahl des berührungslosen Abstandssensors noch auf die Targetoberfläche treffen muss. Ferner darf durch den Abstand zwischen Abstandssensor und Messtarget der Durchmesser des Messtrahls im Zielpunkt nicht zu groß sein, um noch auswertbare Messungen erzielen zu können. Auch hierüber ist dieser Abstand mit einer Maximaldistanz beschränkt. Entsprechend kann bei einer Anordnung in einem Rotorblatt, bei der der Abstandssensor im Bereich der Rotorblattwurzel angeordnet ist, in der Regel das Messtarget nicht in der äußersten Rotorblattspitze angeordnet sein, sondern wird sich näher an der Rotorblattwurzel befinden. Vorzugsweise ist das Messtarget dabei allerdings innerhalb des der Rotorblattspitze zugewandten Drittels des Rotorblattes angeordnet.

Denkbar ist ferner, in einem Hohlbauteil eine Messtrecke mit mehreren in Längsrichtung hintereinander angeordneten Paaren aus wenigstens einem Abstandssensor und je einem zugeordneten Messtarget anzuordnen, um z.B. Durchbiegungsprofile aufzunehmen und zu vermessen.

Die mit dem erfindungsgemäßen Verfahren bzw. durch das erfindungsgemäße System gewonnenen Daten können einer Steuerung eingegeben werden, die je nach vorgegebenen Aktionen einen Eingriff in den Betriebsablauf der Windenergieanlage vornimmt. So kann die Windenergieanlage beispielsweise bei festgestellter Materialermüdung und drohender Kollision eines Rotorblattes mit dem Turm angehalten und aus dem Wind gedreht werden. Aber auch im normalen Anlagenbetrieb können laststeigernde und ertragssenkende Betriebszustände wie z.B. aerodynamisch erregte Unwuchten in Folge turbulenter Strömungssituationen in der bestrichenen Rotorfläche erkannt und durch eine Korrektur der Anlagensteuerung abgestellt werden.

Darüber hinaus ist es von Vorteil, wenn in der Steuerung die Messdaten des erfindungsgemäßen Systems, vorzugsweise für sämtliche vermessenen Hohlbauteile, gespeichert und für eine spätere Auswertung zur Verfügung gehalten werden. So kann die Steuerung z.B. auch einen alterungsbedingt erforderlichen Austausch eines Hohlbauteils (z.B. eines Rotorblattes) erkennen.

### Kurze Beschreibung der Abbildungen der Zeichnungen

Weitere Vorteile und Merkmale der Erfindung ergeben sich aus der nachfolgenden Beschreibung von Ausführungsbeispielen anhand der beigefügten Figuren. Dabei zeigen:
Fig. 1 schematisch eine Seitenansicht einer Windenergieanlage mit darin skizzierten für die Durchführung des erfindungsgemäßen Verfahrens bzw. den Einsatz des erfindungsgemäßen Systems geeigneten Messstrecken;
Fig. 2 eine Schemadarstellung eines Bauteils bzw. Hohlbauteils zur allgemeinen Erläuterung des Prinzips des erfindungsgemäßen Verfahrens bzw. Systems in einer ersten Variante;
Fig. 3 eine Schemadarstellung eines Bauteils bzw. Hohlbauteils zur allgemeinen Erläuterung des Prinzips des erfindungsgemäßen Verfahrens bzw. Systems in einer zweiten Variante;
Fig. 4 schematisch in einer dreidimensionalen Ansicht ein Messtarget zur Verwendung in dem erfindungsgemäßen Verfahren bzw. System;
Fig. 5 in einer stark schematisierten Frontalansicht einen Ausschnitt aus dem Messtarget nach Fig. 4 zur Erläuterung des Prinzips dieses Messtargets;
Fig. 6 schematisch in einer der Fig. 4 entsprechenden dreidimensionalen Ansicht ein weiteres Messtarget zur Verwendung in dem erfindungsgemäßen Verfahren bzw. System;
Fig. 7 in einer Fig. 5 ähnlichen stark schematisierten Frontalansicht einen Ausschnitt aus dem Messtarget nach Fig. 6 zur Erläuterung des Prinzips dieses Messtargets; und
Fig. 8 schematisch in drei Darstellungen die Verfahrensdurchführung jeweils in einem schematisch dargestellten Rotorblatt.

### Weg(e) zur Ausführung der Erfindung

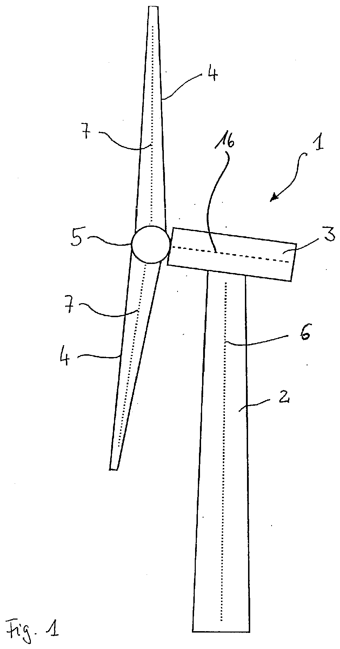

Eine in Fig. 1 schematisch dargestellte Windenergieanlage 1 setzt sich im Wesentlichen zusammen aus einem Turm 2 mit einer darauf drehbar aufgesetzten Gondel 3 und einem an der Gondel befestigten Rotor aus an einer Nabe 5 angesetzten Rotorblättern 4.

Die einzelnen Bauteile der Windenergieanlage 1 sind aufgrund verschiedener Lasten gerichteten Kräften ausgesetzt, die für eine Auslenkung bzw. Durchbiegung dieser Bauteile verantwortlich sein können. Zum Beispiel kann der Turm 2, der heute üblicherweise als Hohlbauteil aus Stahl- oder Stahlbetonelementen gefertigt ist, aufgrund des gegen den Rotor lastenden Winddruckes in Richtung des Windstromes aus einer Ruheposition ausgelenkt werden. Die Rotorblätter 4 werden ebenfalls aufgrund des Winddruckes aus einer gemeinsamen Rotorebene in Richtung der Strömung ausgelenkt, sie unterliegen ferner dem innerhalb der Rotorebene lotrecht nach unten wirkenden Einfluss der Schwerkraft, der eine weitere Verbiegung und damit Auslenkung aus einer Normalposition bewirkt. Insbesondere die Rotorblätter erfahren damit zeitgleich Auslenkungen mit Komponenten in zwei unterschiedliche, aufeinander lotrecht stehende Richtungen.

Diese Auslenkungen sowohl der Rotorblätter 4 als auch des Turmes 2 können mit einem nachfolgend noch näher geschilderten erfindungsgemäßen Verfahren bzw. System jedenfalls in einer Richtungskomponente erfasst werden, was durch die Einzeichnung von Messstrecken 6 (im Turm) und 7 (in den Rotorblättern) in Fig. 1 angedeutet ist. Eine weitere Messstrecke 16 ist in Fig. 1 in der Gondel 3 eingezeichnet. Sie verläuft in Längsrichtung der Gondel, genauer gesagt entlang der Längsrichtung des dort angeordneten Triebstranges. Mit dieser Messstrecke 16 ist angedeutet, dass insbesondere der in der Gondel 3 angeordnete Maschinenträger auf Auslenkungen hin überwacht werden kann, die z.B. bei dem sogenannten "Tanzen" des Maschinenträgers auftreten und insbesondere auf unerwünschte Unwuchten im Triebstrang zurückzuführen sind.

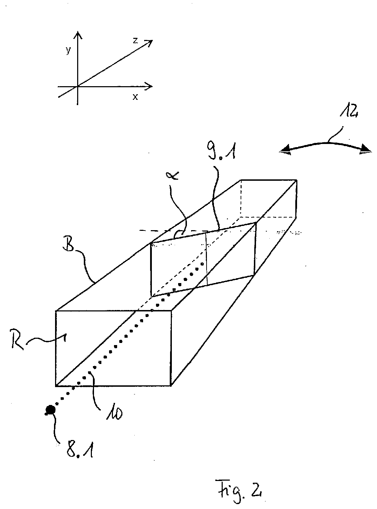

In Fig. 2 ist das Grundprinzip des erfindungsgemäßen Verfahrens bzw. des erfindungsgemäßen Systems in einer Messrichtung in einer ersten Variante anhand eines hier für die einfache Darstellung als Quader perspektivisch angedeuteten Hohlraumbauteils B verdeutlicht. Für eine bessere Orientierung ist in Fig. 2 ein Koordinatensystem der Koordinaten x, y und z dargestellt. Ein hier einfach punktförmig angedeuteter Abstandssensor 8.1 zur berührungslosen Abstandsmessung ist mit seinem Messstrahl 10 innerhalb des Hohlraumes des Bauteils B verlaufend ausgerichtet. Der Messstrahl 10 zielt auf ein in einem Abstand in Längsrichtung des Bauteils B verschoben im Inneren des Hohlraumes angeordnetes Messtarget 9.1, welches eine dem Abstandssensor 8.1 zugewandte Targetoberfläche aufweist. In dieser rechtwinkligen Darstellung gut zu erkennen ist, dass das Messtarget 9.1 mit einer Targetoberfläche eben ausgebildet ist, wobei diese Ebene verkippt ist gegenüber einer Referenzebene R, die zu dem Messstrahl 10, also der Messrichtung des Abstandssensors 8.1 eine senkrechte Ebene bildet. Die Verkippung ist dabei in einer Raumrichtungen vollzogen, genauer eine Verkippung um einen Winkel α um die in der Referenzebene liegende y-Achse.

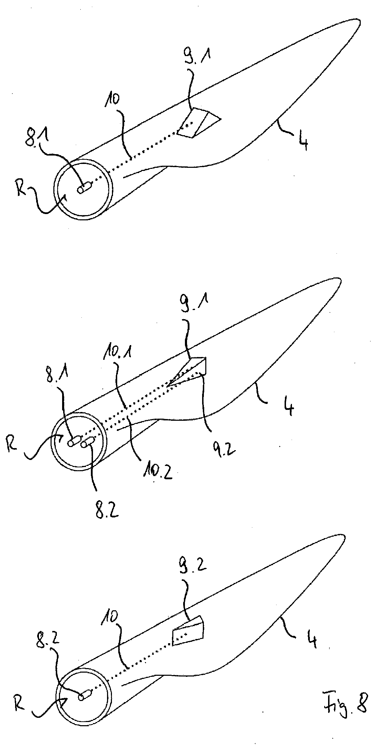

Dadurch ist eine Situation geschaffen, in der in Richtung der x-Achse oder auf einer parallelen Linie liegende Punkte der von dem Abstandssensor 8.1 angepeilten Targetoberfläche des Messtargets 9.1 zu der Referenzebene R jeweils einen unterschiedlichen Abstand aufweisen. Kommt es nun zu einer Auslenkung des Bauteils B, also einer Verbiegung, so wandert der Punkt, in dem der Messstrahl 10 des Abstandssensors 8.1 auf die Targetoberfläche des Messtargets 9.1 auftritt. Dabei stellt der Abstandssensor einen anderen Abstand feststellt als in der unbelasteten Normalposition. Da jedem gemessenen Abstand eindeutig eine Abstandskomponente in x-Richtung auf der Targetoberfläche des Messtargets zugeordnet ist, kann diesem gemessenen Abstand eine seitliche Auslenkungskomponente des Messtargets 9.1 in dieser x-Richtung zugeordnet werden, was durch entsprechende Pfeile 12 angedeutet ist. Diese Situation in einem Rotorblatt 4 ist schematisch in Fig. 8 in der obersten Darstellung gezeigt.

Das Messtarget 9.1 (wie auch alle weiteren nachstehend noch beschriebenen Messtargets) ist dabei nicht etwa als Reflektor für die verwendeten Messstrahlen ausgebildet. Es kann für eine hier bevorzugt verwendete optische Abstandsmessung (mit einem Laser) z.B. einfach als hell eingefärbte Platte aus Kunststoff oder einem Holzwerkstoff gebildet sein.

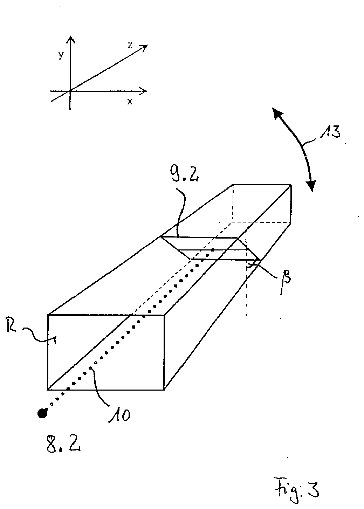

In Fig. 3 ist eine ähnliche Situation mit einem in einem wiederum schematisch als Quader dargestellten Bauteil B angeordneten Abstandssensor 8.2 und einem Messtarget 9.2 gezeigt. Hier ist das Messtarget 9.2 erneut mit einer ebenen Targetoberfläche ausgestattet, die diesmal um die in der Referenzebene R liegende x-Achse verkippt ist, hier um einen Winkel β. Bei dieser Anordnung ist der Abstand zwischen der Referenzebene R (also dem Abstandssensor 8.2) und Messtarget 9.2 zu entlang in Richtung der y-Achse oder parallelen Linien hierzu verlaufenden Punkten jeweils unterschiedlich, so dass bei einer Auslenkung des Hohlbauteils B über eine Abstandsmessung die Auslenkungskomponente in dieser y-Richtung gemessen werden kann, was mit dem Doppelpfeil 13 veranschaulicht wird. Auch hier ist in Fig. 8, diesmal in der untersten Darstellung diese Situation bezogen auf ein Rotorblatt gezeigt.

Es ist nun ohne weiteres ersichtlich, dass aus einer kombinierten Anordnung von einem Paar aus Abstandssensor 8.1 und Messtarget 9.1 sowie einem Paar aus Abstandssensor 8.2 und Messtarget 9.2 Messungen der x- und der y-Komponenten der Auslenkung und damit die Auslenkung insgesamt bestimmt werden können. Dabei können bei der Verwendung eines Messkörpers mit unterschiedlichen Oberflächen die beiden Messtargets 9.1 und 9.2 auch in einem einzigen Messkörper verwirklicht sein, der dann zwei Messtargets darstellt. Diese Situation ist in Fig. 8 in der mittleren Darstellung gezeigt, wo die Messstrahlen der beiden Abstandssensoren 8.1 und 8.2 mit 10.1 und 10.2 bezeichnet sind.

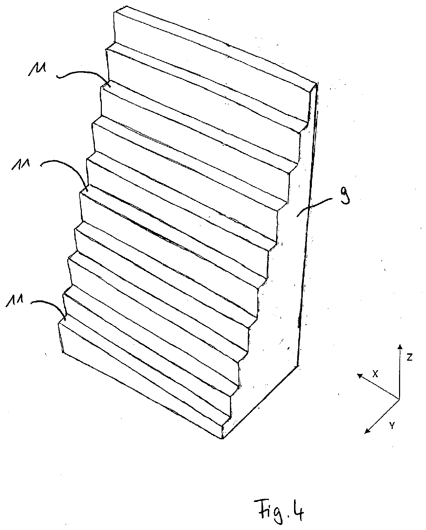

Alternativ kann mit einem Paar aus Abstandssensor und Messtarget 9 vorgegangen werden, wenn das Messtarget für jeden (Mess-)Punkt auf der Targetoberfläche einen einzigartigen Abstand zu der Referenzebene R aufweist. Beispiele für mögliche solcher Messtargets 9 sind in den Figuren 4 und 5 sowie 6 und 7 gezeigt.

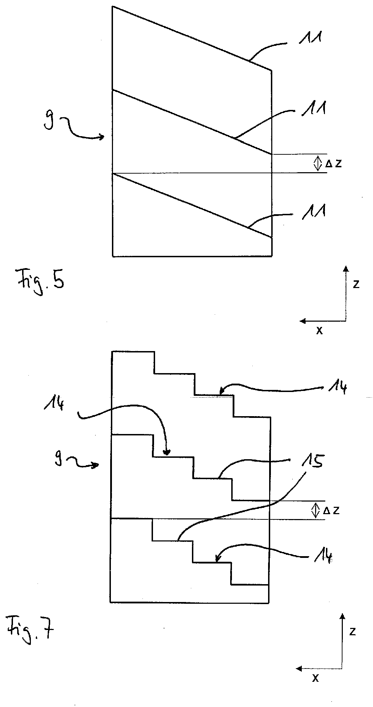

Bei dem ersten Beispiel eines solchen für die gleichzeitige Messung der Auslenkung in zwei linear unabhängigen Richtungskomponenten geeigneten Messtargets, wie es in den Fign. 4 und 5 gezeigt ist, besteht die Messoberfläche aus in y-Richtung treppenartig gestuften Abschnitten 11, in denen die Oberfläche jeweils geneigt zu der Referenzebene R verläuft. Wie insbesondere aus Fig. 5 deutlich wird, sind die jeweils einander nächstgelegenen Punkte der einzelnen Abschnitte 11 um eine Abstanddifferenz (einen Versatz) Δz voneinander beabstandet. So kann mit einer Abstandsmessung auf einfache Weise auf die angepeilte Position (den Messpunkt) auf der Targetoberfläche geschlossen werden und so durch einfache trigonometrische Überlegungen auf die Auslenkung des Hohlbauteils in x- und auch in y-Richtung (den in der Referenzebene liegenden Richtungen).

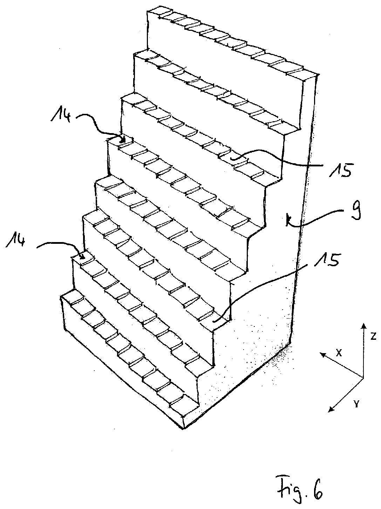

Ein weiteres Beispiel für ein mögliches Messtarget 9 für die gleichzeitige Messung der Auslenkung des Hohlbauteils in sowohl x- als auch y-Richtung mit nur einem Abstandssensor ist in den Fign. 6 und 7 dargestellt. Auch hier sind treppenartig übereinander angeordnet verschiedene Abschnitte 14 vorgesehen, die jedoch anders als in dem in den Fign. 4 und 5 gezeigten Messtarget 9 nicht durchgehend und geneigt zu der Referenzebene R verlaufen, sondern ihrerseits ebenfalls stufenförmig in einzelnen Stufen 15. Jede dieser Stufen 15 ergibt einen Messpunkt, so dass sich durch die Größe der Stufen 15 die Auflösung der Messpunkte und damit die Genauigkeit des Systems bestimmen lässt. Auch hier ist wieder wichtig und in der Darstellung in Fig. 7 gut erkennbar, dass zwischen den nächstgelegenen Stufen 15 benachbarter Abschnitte 14 eine Abstandsdifferenz Δz besteht, um die Eindeutigkeit der Abstandsmessung bei einer bestimmten Auslenkung des mit einem solchen Messtarget versehenen Hohlbauteils zu gewährleisten.

Die in den Figuren 4, 5 sowie 6, 7 gezeigten Messtargets 9 wurden von dem Erfinder eigens für diese Anwendung entwickelt. Sie können aber auch in anderen Anwendungen als im Bereich der Vermessung der Auslenkung von Hohlbauteilen von Windenergieanlagen zum Einsatz kommen, zum Beispiel im Bereich der Vermessung der Auslenkung von Brückenbauteilen, Schiffen, Flugzeugflügeln, Flugzeugrümpfen, Elementen von Dachkonstruktionen von Gebäuden, Bauteilen von Dämmen, Sperrwerken und Deichanlagen oder dergleichen.

Der berührungslose Abstandssensor 8.1, 8.2 ist dabei vorzugsweise ein Laser-Abstandssensor, da dieser sich einfach realisieren und kostengünstig beschaffen und in eine Windenergieanlage 1 einbauen lässt.

Es dürfte einleuchten, dass mit der hier beschriebenen erfindungsgemäßen Methode der Messung einer Auslenkung eines Hohlbauteils einer Windenergieanlage 1 ein Verfahren bzw. ein System geschaffen ist, welches nicht nur eine besonders einfache technische Realisierung bedeutet und wartungsarm sowie problemlos nachrüstbar ist, sondern dass insbesondere es dieses Verfahren in vorteilhaften Ausgestaltungen auch erlaubt, eine Auslenkung der Hohlraumbauteile aus einer Normalposition in zwei unterschiedlichen, voneinander linear unabhängigen Raumrichtungen zu erfassen bzw. zu überwachen.

Mit Vorteil können die mittels des erfindungsgemäßen Verfahrens bzw. durch das erfindungsgemäße System gewonnenen Daten über eine Auslenkung der Hohlraumbauteile der Windenergieanlage 1 für die Erstellung einer Lasthistorie genutzt werden. Ebenso können die Daten aber auch genutzt werden, um sie einer Steuerung der Windenergieanlage 1 zuzuführen. Insbesondere können so etwa mit dem erfindungsgemäßen Verfahren festgestellte Abweichungen vom normalen Betriebsverhalten in Form von zusätzlichen Schwingbewegungen, Vibrationen eines Rotorblattes, des gesamten Rotors und des Turmes 4 erfasst und z.B. als Anlass für die Korrektur des Betriebsverhalten z.B. durch Anpassung des sogenannten Pitch-Winkels des Rotorblattes 4 genutzt werden. Gleichermaßen kann eine Warnung bei festgestellter kritischer Materialermüdung ausgegeben werden. Diese Vorteile können insbesondere deshalb erreicht werden, weil das erfindungsgemäße System eine schnelle, zuverlässige und störunanfällige Erfassung und Überwachung der Auslenkungen der Hohlraumbauteile einer Windenergieanlage 1 aus der Normalposition ermöglicht.

### Bezugszeichenliste

- 1: Windenergieanlage
- 2: Turm
- 3: Gondel
- 4: Rotorblatt
- 5: Nabe
- 6: Messstrecke
- 7: Messstrecke
- 8.1, 8.2: Abstandssensor
- 9, 9.1, 9.2: Messtarget
- 10, 10.1, 10.2: Messstrahl
- 11: Absch n itt
- 12: Pfeile
- 13: Doppelpfeil
- 14: Abschnitt
- 15: Stufe
- 16: Messstrecke
- B: Bauteil
- R: Referenzebene
- Δz: Abstandsdifferenz

## Patentansprüche

1. Verfahren zur Messung einer Auslenkung eines im Wesentlichen langgestreckten Hohlbauteils (B, 2, 4) einer Windenergieanlage (1) aus einer Normalposition wobei im Innern des Hohlbauteils (B, 2, 4) an einer ersten Position wenigstens ein Abstandssensor (8.1, 8.2) zur berührungslosen, gerichteten und punktgenauen Abstandsmessung angeordnet wird, der in Richtung einer innerhalb des Hohlbauteils (B, 2, 4) liegenden zweiten Position Abstandsmessungen zu einem Zielpunkt vornimmt, dass ferner im Innern des Hohlbauteils (B, 2, 4) an der zweiten Position ein Messtarget (9, 9.1, 9.2) angeordnet wird, welches eine Targetoberfläche aufweist, die in einem Messbereich jedenfalls in einer Richtung (x, y) gesehen quer zu einer zu der Messrichtung (10, 10.1, 10.2) des Abstandssensors (8.1, 8.2) senkrechten Referenzebene (R) verläuft, und dass mit dem Abstandssensor (8.1, 8.2) kontinuierlich oder in Intervallen Abstandsmessungen zu der Targetoberfläche vorgenommen werden, wobei die Ergebnisse der Abstandsmessungen in einer Rechnereinheit ausgewertet werden und aus diesen eine jeweils zugehörige Auslenkung des Hohlbauteils (B, 2, 4) aus der Normalposition, jedenfalls hinsichtlich der Richtungskomponente der Richtung (x, y), in der die Targetoberfläche quer zu der Referenzebene (R) verläuft, bestimmt wird
**dadurch gekennzeichnet, dass** zur Messung einer Auslenkung des Hohlbauteils in zwei voneinander linear unabhängigen Richtungen im Innern des Hohlbauteils (B, 2, 4) ein Paar aus Abstandssensor, der eine punktgenaue Abstandmessung vornehmen kann, und Messtarget (9) angeordnet wird, wobei das Messtarget (9) eine Targetoberfläche aufweist, die an jedem Messpunkt, der vom Abstandssensor gemessen werden kann, zu einer zu der Messrichtung des Abstandssensors senkrechten Referenzebene (R) einen unterschiedlichen Abstand aufweist.

2. Verfahren nach Anspruch 1, **dadurch gekennzeichnet, dass** für eine Messung der Auslenkung des Hohlbauteils in zwei linear unabhängigen Richtungskomponenten wenigstens zwei Paare bestehend aus jeweils einem berührungslosen Abstandssensor (8.1, 8.2) und einem Messtarget (8.1, 8.2) angeordnet werden, wobei ein erstes Messtarget (9.1) eine Targetoberfläche aufweist, die in einem Messbereich in einer ersten Richtung (x) gesehen quer zu einer zu der Messrichtung (10.1) des zugeordneten Abstandssensors (8.1) senkrechten ersten Referenzebene verläuft, und wobei ein zweites Messtarget (9.2) eine Targetoberfläche aufweist, die in einem Messbereich in einer zweiten, zu der ersten Richtung (x) verschiedenen Richtung (y) gesehen quer zu einer zu der Messrichtung (10.2) des zugeordneten Abstandssensors (8.2) senkrechten zweiten Referenzebene (R) verläuft, und wobei mit den Abstandssensoren (8.1, 8.2) kontinuierlich oder in Intervallen Abstandsmessungen zu der jeweils zugeordneten Targetoberfläche vorgenommen werden, wobei die Ergebnisse der Abstandsmessungen in einer Rechnereinheit ausgewertet werden und aus diesen eine jeweils zugehörige Auslenkung des Hohlbauteils (B, 2, 4) aus der Normalposition in zwei linear unabhängigen Richtungen (x, y) bestimmt wird.

3. Verfahren nach einem der vorhergehenden Ansprüche, **dadurch gekennzeichnet, dass** das Hohlbauteil ein Turm (2) oder ein Abschnitt eines Turmes der Windenergieanlage (1) oder ein eine Rotorblattwurzel sowie eine dieser gegenüberliegende Rotorblattspitze aufweisendes Rotorblatt (4) ist und die erste Position der Rotorblattwurzel zugewandt und die zweite Position von der ersten Position in Richtung der Rotorblattspitze verschoben ist.

4. System zur Messung einer Auslenkung eines im Wesentlichen langgestreckten Hohlbauteils (B, 2, 4) einer Windenergieanlage (1) aus einer Normalposition, aufweisend:
a) wenigstens einen innerhalb des Hohlbauteils (B, 2, 4) an einer ersten Position angeordneten Abstandssensor (8.1, 8.2) zur berührungslosen, gerichteten und punktgenauen Abstandsmessung in Richtung einer zweiten innerhalb des Hohlbauteils (B, 2, 4) gelegenen Position,
b) wenigstens ein an der zweiten Position angeordnetes, von dem wenigstens einen Abstandssensor (8.1, 8.2) angepeiltes Messtarget (9, 9.1, 9.2) mit einer Targetoberfläche, die in einem Messbereich jedenfalls in einer Richtung (x, y) gesehen quer zu einer zu der Messrichtung (10, 10.1, 10.2) des wenigstens einen Abstandssensors (8.1, 8.2) senkrechten Referenzebene (R) verläuft, und
c) eine Rechnereinheit zum Auswerten der von dem wenigstens einen Abstandssensor (8.1, 8.2) bestimmten Abstände zu der Targetoberfläche und Ermitteln einer Auslenkung des Hohlbauteils (B, 2, 4) aus der Normalposition jedenfalls hinsichtlich der Richtungskomponente der Richtung (x, y), in der die Targetoberfläche quer zu der Referenzebene (R) verläuft, aus diesen Daten
**dadurch gekennzeichnet, dass** es ein Paar aus Abstandssensor, der geeignet ist, eine punktgenaue Abstandmessung vorzunehmen, und Messtarget (9) aufweist, wobei das Messtarget (9) eine Targetoberfläche aufweist, die an jedem Messpunkt, der vom Abstandssensor gemessen werden kann, zu einer zu der Messrichtung des Abstandssensors senkrechten Referenzebene (R) einen unterschiedlichen Abstand aufweist.

5. System nach Anspruch 4, **dadurch gekennzeichnet, dass** es für eine Messung der Auslenkung des Hohlbauteils in zwei linear unabhängigen Richtungskomponenten wenigstens zwei Paare bestehend aus jeweils einem berührungslosen Abstandssensor (8.1, 8.2) und einem Messtarget (9.1, 9.2) aufweist, wobei ein erstes Messtarget (9.1) eine Targetoberfläche aufweist, die in einem Messbereich einer ersten Richtung (x) gesehen quer zu einer zu der Messrichtung (10.1) des zugeordneten Abstandssensors (8.1) senkrechten ersten Referenzebene (R) verläuft, und wobei ein zweites Messtarget (9.2) eine Targetoberfläche aufweist, die in einem Messbereich in einer zweiten, zu der ersten Richtung (x) verschiedenen Richtung (y) gesehen quer zu einer zu der Messrichtung (10.2) des zugeordneten Abstandssensors (8.2) senkrechten zweiten Referenzebene (R) verläuft, und wobei die Abstandssensoren (8.1, 8.2) zur Datenübermittlung an die Rechnereinheit angeschlossen sind.

6. System nach Anspruch 5, **dadurch gekennzeichnet, dass** die Targetoberflächen der Messtargets (9.1, 9.2) eben und gegenüber einer gemeinsamen Referenzebene (R) für die Abstandssensoren (8.1, 8.2) verkippt sind, wobei eine erste Targetoberfläche um eine erste innerhalb der oder parallel zu der Referenzebene (R) verlaufende Achse und die zweite Targetoberfläche um eine zweite innerhalb der oder parallel zu der Referenzebene verlaufende, die erste Achse schneidende Achse verkippt sind, um jeweils einen Winkel α bzw. β, für die gilt 0° < α, β < 90°.

7. System nach einem der Ansprüche 4 bis 6, **dadurch gekennzeichnet, dass** das Messtarget (9) in einer ersten quer zu der Messrichtung verlaufenden Richtung treppenartig aufgebaut ist mit benachbarten Stufen (11, 14), die in ihrer quer zu der Richtung der treppenartigen Stufung und auch quer zu der Messrichtung liegenden Verlaufsrichtung gesehen an jedem Messpunkt einen zu der Referenzebene unterschiedlichen Abstand aufweisen, wobei die zwischen den Stufen größere Abstandssprünge in Richtung der Referenzebene bestehen als der Abstandssprung innerhalb der jeweiligen Stufe.

8. System nach Anspruch 7, **dadurch gekennzeichnet, dass** die Stufen (11) in Verlaufsrichtung kontinuierlich geneigt verlaufen.

9. System nach Anspruch 8, **dadurch gekennzeichnet, dass** in Verlaufsrichtung der Stufen (14) diese ebenfalls gestuft verlaufen mit einer Anzahl von Stufenabschnitten (15), die jeweils einen anderen Abstand zu der Referenzebene (R) haben.

10. System nach einem der Ansprüche 4 bis 9, **dadurch gekennzeichnet, dass** der wenigstens eine Abstandssensor (8.1, 8.2) ein Lasersensor ist.

11. System nach einem der Ansprüche 4 bis 10, **dadurch gekennzeichnet, dass** die Rechnereinheit eine Steuerung aufweist oder mit einer solchen verbunden ist, die für einen Eingriff in den Betriebsablauf der Windenergieanlage (1) basierend auf den ermittelten Auslenkungsdaten des Hohlbauteils (B, 2, 4) eingerichtet ist.

12. System nach einem der Ansprüche 4 bis 11, **dadurch gekennzeichnet, dass** es mindestens zwei jeweils aus Abstandssensor (8.1, 8.2) und Messtarget (9, 9.1, 9.2) bestehende Messpaare aufweist, wobei die Messpaare entlang der Längserstreckung des Hohlbauteils (B, 2, 4) hintereinander angeordnet sind.

13. System nach einem der Ansprüche 4 bis 12, **dadurch gekennzeichnet, dass** das Hohlbauteil ein Turm (2) oder ein Abschnitt eines Turms (2) der Windenergieanlage ist oder ein eine Rotorblattwurzel sowie eine dieser gegenüberliegende Rotorblattspitze aufweisendes Rotorblatt (4) ist und dass die erste Position eine der Rotorblattwurzel zugewandte Position und die zweite Position eine ausgehend von der ersten Position in Richtung der Rotorblattspitze versetzte Position ist, wobei insbesondere das wenigstens eine Messtarget (9, 9.1, 9.2) in einem Bereich des Rotorblattes (4) angeordnet ist, der sich innerhalb des der Rotorblattspitze zugewandten Drittels des Rotorblattes (4) befindet.

## Claims

1. A method for measuring a deflection of a substantially elongate hollow component (B, 2, 4) of a wind energy system (1) from a normal position wherein at least one distance sensor (8.1, 8.2) is arranged at a first position inside the hollow component (B, 2, 4), to perform contactless, directional and precise distance measurements, which sensor performs distance measurements in the direction of a second position located inside the hollow component (B, 2, 4) to a target point, that moreover inside the hollow component (B, 2,4) a measuring target is provided at the second position (9, 9.1, 9.2), which includes a target surface, which extends in a measuring range, respectively in a direction (x, y), as seen transversally to a reference plane (R) perpendicular to the measuring direction (10, 10.1, 10.2) of the distance sensor (8.1, 8.2),
and that distance measurements are taken continuously or at intervals with the distance sensor (8.1, 8.2), whereas the results of the distance measurements are interpreted in an interpreting unit and each corresponding deflection of the hollow component (B, 2, 4) from said measurements, with respect to the normal position, systematically with respect to the direction component of the direction (x, y) in which the target surface extends perpendicular to the reference plane (R),
**characterised in that** a pair of distance sensors is provided to measure the deflection of the hollow component in two linear independent directions inside the hollow component, sensors which can perform precise distance measurements, and a measuring target is arranged, whereas the measuring target (9) includes a target surface which has a different distance with respect to a reference plane (R) perpendicular to the measuring distance of the distance sensor, at each measurement point which can be measured by the distance sensor.

2. The method according to claim 1, **characterised in that** at least two pairs consisting respectively of contactless distance sensor (8.1, 8.2) and a measuring target (8.1, 8.2) are arranged in two linear independent direction components, for measuring the deflection of the hollow component, whereas a first measuring target (9.1) includes a target surface, which extends in a measuring range, respectively in a direction (x, y), as seen transversally to a reference plane (R) perpendicular to the measuring direction (10.1) of the allocated distance sensor (8.1), whereas a second measuring target (9.2) includes a target surface, which extends in a measuring range, in a second different direction (y) perpendicular to the first direction (x), as seen transversally to a second reference plane perpendicular to the measuring direction (10.2) of the allocated distance sensor (8.2), and whereas that distance measurements with respect to the respectively allocated target surface are taken continuously or at intervals with the distance sensors (8.1, 8.2), whereas the results of the distance measurements are interpreted in a computing unit and a corresponding deflection of the hollow component (B, 2, 4) from the normal position is determined from said measurements in two linear independent directions (x, y).

3. The method according to any of the preceding claims, **characterised in that** the hollow component is a tower (2) or a portion of a tower of a wind energy system (1) or a rotor blade root as well as a rotor blade (4) including a rotor blade tip opposed to said blade and the first position faces the rotor blade root and the second position is offset from the first position in the direction of the rotor blade tip.

4. A system for measuring a deflection of a substantially elongate hollow component (B, 2, 4) of a wind energy system (1) from a normal position, comprising:
a) at least one distance sensor (8.1, 8.2) arranged in a first position, inside the hollow component (B, 2, 4) for contactless, directed and precise distance measurements in the direction of a second position situated inside the hollow component (B, 2, 4),
b) at least a measuring target (9, 9.1, 9.2) situated in a second position, fixed from said at least one distance sensor (8, 8.1, 8.2) with a target surface, which extends in a measuring range respectively in a direction (x, y), seen transversal to a reference plane (R) perpendicular to the measuring direction (1, 10.1, 10.2) of said at least one distance sensor (8.1, 8.2), and
c) a computing unit for interpreting the distances determined by said at least one distance sensor (8.1, 8.2) with respect to the target surface and for determining a deflection of the hollow component (B, 2, 4) from the normal position systematically with respect to the direction components of the direction (x, y), in which the target surface extends perpendicular to the reference plane (R), from said data,
**characterised in that** it includes a pair of distance sensors, adapted to perform precise distance measurements, and a measuring target (9), whereas the measuring target (9) includes a target surface which has a different distance at each measuring point which can be measured by the distance sensor, with respect to a reference plane (R) perpendicular to the measuring direction of the distance sensor.

5. The system according to claim 4, **characterised in that** at least two pairs consisting respectively of contactless distance sensor (8.1, 8.2) and a measuring target (9.1, 9.2) are arranged in two linear independent direction components, for measuring the deflection of the hollow component, whereas a first measuring target (9.1) includes a target surface, which extends in a measuring range of a first direction (x), as seen transversally to a reference plane (R) perpendicular to the measuring direction (10.1) of the allocated distance sensor (8.1), and whereas a second measuring target (9.2) includes a target surface, which extends in a measuring range, in a second different direction (y) perpendicular to the first direction (x), as seen transversally to a second reference plane (R) perpendicular to the measuring direction (10.2) of the allocated distance sensor (8.2), and whereas the distance sensors (8.1, 8.2) for transmitting data are connected to the computing unit.

6. The system according to claim 5, **characterised in that** the target surfaces of the measuring target (9.1, 9.2) are tilted evenly and opposite a common reference plane (R) for the distance sensors (8.1, 8.2), whereas a first target surface is tilted around a first axis extending inside or parallel to the reference plane (R) and the second target surface is tilted around a second axis, intersecting the first axis and extending inside or parallel to the reference place, with a respective angle α or β, with 0° < α, ß <90°.

7. The system according to any of the claims 4 to 6, **characterised in that** the measuring target (9) is provided in a first direction extending transversal to the measuring direction with neighbouring steps (11, 14), which have a different distance with respect to the reference plane at each measuring point, seen in its direction extending transversal to the stepped gradation and also transversal to the measuring direction, whereas the distance jumps between the steps are greater in the direction of the reference place than the distance jump inside the respective step.

8. The system according to claim 7, **characterised in that** the steps (11) extend continuously at an angle in the direction of extension.

9. The system according to claim 8, **characterised in that** in the direction of extension of the steps (14), the latter also extend in a stepped manner with a number of step sections (15), which also have respectively another distance to the reference plane (R).

10. The system according to one of the claims 4 to 9, **characterised in that** said at least one distance sensor (8.1, 8.2) is a laser sensor.

11. The system according to one of the claims 4 to 10, **characterised in that** the computing unit includes a control or is connected to such a control, which is provided for intervening in the operating procedure of the wind energy system (1) on the basis of the deflection data of the hollow component (B, 2, 4) thus determined.

12. The system according to one of the claims 4 to 11, **characterised in that** it includes at least two measuring pairs consisting respectively of distance sensors (8.1, 8.2) and measuring target (9, 9.1, 9.2), whereas the measuring pairs are arranged behind one another along the longitudinal extension of the hollow component (B, 2, 4).

13. The system according to one of the claims 4 to 12, **characterised in that** the hollow component is a tower (2) or a portion of a tower of a wind energy system or a rotor blade root as well as a rotor blade (4) including a rotor blade tip opposed to said blade and that the first position is a position facing the rotor blade root and the second position is a position offset from the first position in the direction of the rotor blade tip, whereas in particular said at least one measuring target (9, 9.1, 9.2) is arranged in a region of the rotor blade (4) which is situated inside the third of the rotor blade (4) facing the rotor blade tip.

## Revendications

1. Procédé pour mesurer la déviation d'un élément creux sensiblement allongé (B, 2, 4) d'une éolienne (1) par rapport à une position normale dans laquelle au moins un capteur de distance (8.1, 8.2) est agencé à une première position à l'intérieur de l'élément creux (B, 2, 4), pour effectuer des mesures de distance sans contact, directionnelles et précises, lequel capteur effectue des mesures de distance dans la direction d'une seconde position située à l'intérieur de l'élément creux (B, 2, 4) jusqu'à un point cible, qu'en outre, à l'intérieur de l'élément creux (B, 2, 4), une cible de mesure est prévue dans la seconde position (9, 9.1, 9.2), qui comprend une surface cible qui s'étend dans une plage de mesure respectivement dans une direction (x, y), vue transversalement à un plan de référence (R) perpendiculaire à la direction de mesure (10, 10.1, 10.2) du capteur de distance (8.1, 8.2),
et que les mesures de distance sont prises en continu ou à intervalles avec le capteur de distance (8.1, 8.2), tandis que les résultats des mesures de distance sont interprétés dans une unité d'interprétation et chaque déviation correspondante de l'élément creux (B, 2, 4) à partir desdites mesures, par rapport à la position normale, systématiquement par rapport à l'élément directionnel de la direction (x, y) dans laquelle la surface cible s'étend perpendiculairement au plan de référence (R),
**caractérisé en ce qu'**une paire de capteurs de distance est prévue pour mesurer la déviation de l'élément creux dans deux directions indépendantes linéaires à l'intérieur de l'élément creux, capteurs qui peuvent effectuer des mesures de distance précises et une cible de mesure, tandis que la cible de mesure (9) comprend une surface cible qui présente une distance différente par rapport à un plan de référence (R) perpendiculaire à la distance de mesure du capteur de distance, à chaque point de mesure qui peut être mesuré par le capteur de distance.

2. Procédé selon la revendication 1, **caractérisé en ce qu'**au moins deux paires constituées respectivement d'un capteur de distance sans contact (8.1, 8.2) et d'une cible de mesure (8.1, 8.2) sont agencées dans deux éléments de direction indépendants linéaires, pour mesurer la déviation de l'élément creux, tandis qu'une première cible de mesure (9.1) comprend une surface cible qui s'étend dans une plage de mesure, respectivement dans une direction (x, y), vue transversalement à un plan de référence (R) perpendiculaire à la direction de mesure (10.1) du capteur de distance attribué (8.1), tandis qu'une seconde cible de mesure (9.2) comprend une surface cible qui s'étend dans une plage de mesure, dans une seconde direction différente (y) perpendiculaire à la première direction (x), vue transversalement à un second plan de référence perpendiculaire à la direction de mesure (10.2) du capteur de distance attribué (8.2), et tandis que les mesures de distance par rapport à la surface cible respectivement attribuée sont prises en continu ou à intervalles avec les capteurs de distance (8.1, 8.2), tandis que les résultats des mesures de distance sont interprétés dans une unité de calcul et la déviation correspondante de l'élément creux (B, 2, 4) par rapport à la position normale est déterminée à partir desdites mesures dans deux directions indépendantes linéaires (x, y).

3. Procédé selon l'une quelconque des revendications précédentes, **caractérisé en ce que** l'élément creux est une tour (2) ou une partie d'une tour d'une éolienne (1) ou d'une racine de pale de rotor ainsi qu'une pale de rotor (4) comprenant une pointe de pale de rotor opposée à ladite lame et la première position est tournée vers la racine de pale de rotor et la seconde position est décalée par rapport à la première position dans la direction de la pointe de pale de rotor.

4. Système pour mesurer la déviation d'un élément creux sensiblement allongé (B, 2, 4) d'une éolienne (1) à partir d'une position normale, comprenant:
a) au moins un capteur de distance (8.1, 8.2) prévu dans une première position, à l'intérieur de l'élément creux (B, 2, 4) pour effectuer des mesures de distance sans contact, dirigées et précises dans la direction d'une seconde position située à l'intérieur de l'élément creux (B, 2, 4).
b) au moins une cible de mesure (9, 9.1, 9.2) située dans une seconde position, fixée à partir dudit au moins un capteur de distance (8, 8.1, 8.2) avec une surface cible qui s'étend dans une plage de mesure respectivement dans une direction (x, y), vue transversalement à un plan de référence (R) perpendiculaire à la direction de mesure (1, 10.1, 10.2) dudit au moins un capteur de distance (8.1, 8.2) et
c) une unité de calcul pour interpréter les distances déterminées par ledit au moins un capteur de distance (8.1, 8.2) par rapport à la surface cible et pour déterminer la déviation de l'élément creux (B, 2, 4) de la position normale systématiquement par rapport aux éléments directionnels de la direction (x, y), où la surface cible s'étend perpendiculairement au plan de référence (R), à partir desdites données,
**caractérisé en ce qu'**il comprend une paire de capteurs de distance, adaptés pour effectuer des mesures de distance précises, et une cible de mesure (9), tandis que la cible de mesure (9) comprend une surface cible qui présente une distance différente à chaque point de mesure pouvant être mesuré par le capteur de distance, par rapport à un plan de référence (R) perpendiculaire à la direction de mesure du capteur de distance.

5. Système selon la revendication 4, **caractérisé en ce qu'**au moins deux paires constituées respectivement d'un capteur de distance sans contact (8.1, 8.2) et d'une cible de mesure (9.1, 9.2) sont agencées dans deux éléments de direction indépendants linéaires, pour mesurer la déviation de l'élément creux, tandis qu'une première cible de mesure (9.1) comprend une surface cible qui s'étend dans une plage de mesure, respectivement dans une direction (x, y), vue transversalement à un plan de référence (R) perpendiculaire à la direction de mesure (10.1) du capteur de distance attribué (8.1), et tandis qu'une seconde cible de mesure (9.2) comprend une surface cible qui s'étend dans une plage de mesure, dans une seconde direction différente (y) perpendiculaire à la première direction (x), vue transversalement à un second plan de référence perpendiculaire à la direction de mesure (10.2) du capteur de distance attribué (8.2), et que les capteurs de distance (8.1, 8.2) pour la transmission de données sont connectés à l'unité de calcul.

6. Système selon la revendication 5, **caractérisé en ce que** les surfaces cibles de la cible de mesure (9.1, 9.2) sont inclinées uniformément et opposées à un plan de référence commun (R) pour les capteurs de distance (8.1, 8.2), tandis qu'une première surface cible est Inclinée autour d'un premier axe s'étendant à l'intérieur ou parallèlement au plan de référence (R) et la seconde surface cible est inclinée autour d'un second axe, coupant le premier axe et s'étendant à l'intérieur ou parallèlement au point de référence avec un angle respectif α ou ß, avec 0° < α, ß < 90°.

7. Système selon l'une quelconque des revendications 4 à 6, **caractérisé en ce que** la cible de mesure (9) est prévue dans une première direction s'étendant transversalement à la direction de mesure avec les gradins voisins (11, 14), qui présentent une distance différente par rapport au plan de référence à chaque point de mesure, vue dans sa direction s'étendant transversalement à la gradation et également transversal à la direction de mesure, tandis que les sauts de distance entre les gradins sont plus importants dans la direction du point de référence que le saut de distance à l'intérieur du gradin respectif.

8. Système selon la revendication 7, **caractérisé en ce que** les gradins (11) s'étendent en continu selon un angle dans la direction d'extension.

9. Système selon la revendication 8, **caractérisé en ce que**, dans la direction d'extension des gradins (14), ceux-ci s'étendent également de manière étagée avec un certain nombre de sections échelonnées (15), qui présentent également une autre distance par rapport au plan de référence (R).

10. Système selon l'une des revendications 4 à 9, **caractérisé en ce que** ledit au moins un capteur de distance (8.1, 8.2) est un capteur laser.

11. Système selon l'une quelconque des revendications 4 à 10, **caractérisé en ce que** l'unité de calcul comprend une commande ou est reliée à une telle commande, qui est prévue pour intervenir dans le mode opératoire de l'éolienne (1) sur la base des données de déviation de l'élément creux (B, 2, 4) ainsi déterminées.

12. Système selon l'une quelconque des revendications 4 à 11, **caractérisé en ce qu'**il comprend au moins deux paires de mesure constituées respectivement de capteurs de distance (8.1, 8.2) et d'une cible de mesure (9, 9.1, 9.2), tandis que les paires de mesure sont disposées l'une derrière l'autre le long de l'extension longitudinale de l'élément creux (B, 2, 4).

13. Système selon l'une quelconque des revendications 4 à 12, **caractérisé en ce que** l'élément creux est une tour (2) ou une partie d'une tour d'une éolienne ou d'une racine de pale de rotor ainsi qu'une pale de rotor (4) comprenant une pointe de pale de rotor opposée à ladite lame et **en ce que** la première position est une position en regard de la racine de pale de rotor et la seconde position est une position décalée par rapport à la première position dans la direction de l'extrémité de pale de rotor, alors qu'en particulier ladite au moins une mesure cible (9, 9.1, 9.2) est prévue dans une région de la pale de rotor (4) qui est située à l'intérieur du tiers de la pale de rotor (4) en regard de la pointe de pale de rotor.
